# FASCICULE DE BREVET EUROPEEN

(11) **EP 3 150 544 B1**
(45) Date de publication et mention de la délivrance du brevet: **30.10.2019**
(21) Numéro de dépôt: 16190010.5
(22) Date de dépôt: 21.09.2016
(51) Int. Cl.: B66C 1/42, F41A 9/87

(54) **DISPOSITIF DE PRÉHENSION POUR OBUS ET CIVIÈRE ASSOCIÉE**
GREIFVORRICHTUNG FÜR GRANATE, UND ENTSPRECHENDE TRAGE
GRIPPING DEVICE FOR A SHELL AND ASSOCIATED TRAY

(30) Priorité: 29.09.2015 FR 1502026
(43) Date de publication de la demande: 05.04.2017
(73) Titulaire: NEXTER Systems, 42328 Roanne (FR)
(72) Inventeur: Hasler, Jean-Luc, 18023 BOURGES (FR)
(74) Mandataire: Cabinet Chaillot

(56) Documents cités:
- EP-A1- 1 070 932
- DE-C- 305 067
- GB-A- 191 213 778
- US-A- 3 804 453

## Description

Le domaine technique de l'invention est celui des dispositifs de préhension pour obus de gros calibre.

Les obus de gros calibres étant lourds à transporter par des servants de pièce, il est connu d'employer des dispositifs de préhension d'obus qui, couplés à un moyen de levage, soulagent les servants dans ces tâches de manutention.

Les dispositifs de préhension connus emploient souvent des actionneurs complexes tels que des vérins ou des moteurs destinés à saisir l'obus d'une part et à le libérer d'autre part. Ces actionneurs du fait de leur complexité sont couteux et diminuent la fiabilité du dispositif du fait des risques de pannes qui leurs sont propres.

Afin de simplifier le fonctionnement, il est enseigné par le brevet US1039727 l'emploi d'un moyen de préhension comportant une paire de mâchoires destinées à être placées chacune de part et d'autre de l'axe longitudinal de l'obus à saisir. Les mâchoires pivotent dans une position ouverte lorsqu'on les appuie sur l'obus, puis se replacent en une position fermée sous l'action d'un ressort, une fois le diamètre de l'obus franchi (mâchoires en dessous de l'axe de l'obus), bloquant ainsi la sortie de l'obus.

La libération de l'obus se fait en faisant pivoter les mâchoires en position ouverte par un actionneur annexe.

Malgré sa simplification pour saisir l'obus, le dispositif selon le brevet US1039727 nécessite encore un actionneur pour la libération de l'obus.

L'invention propose un dispositif de préhension encore plus simplifié, dans lequel aucun actionneur alimenté en énergie n'est nécessaire. En outre l'invention permet une préhension plus sûre de l'obus.

Le brevet US3804453 décrit un dispositif de préhension pour un projectile de type torpille, dispositif comportant des mâchoires pivotantes pouvant enserrer la torpille, chaque mâchoire comprenant un cran destiné à interférer avec un ergot d'une came pour maintenir les mâchoires en position fermée. Ces moyens figures dans le préambule de la revendication 1.

Ainsi, l'invention a pour objet un dispositif de préhension pour obus, comportant au moins une paire de mâchoires destinées à venir enserrer un obus, chaque mâchoire pivotant entre une position ouverte et une position fermée autour d'un axe de pivotement parallèle à l'axe longitudinal de l'obus, l'axe de pivotement de chaque mâchoire étant situé entre une extrémité inférieure et une extrémité supérieure de la mâchoire, l'extrémité supérieure de chaque mâchoire permettant la fermeture de la mâchoire par appui de cette extrémité supérieure sur un obus à saisir, l'extrémité supérieure de chaque mâchoire comportant un cran destiné à interférer avec un ergot d'une came pour maintenir les mâchoires en position fermée, la came étant solidaire d'une palette pivotante dont le pivotement permet de faire pivoter la came et de dégager ainsi l'ergot de la trajectoire tournante du cran de la mâchoire ce qui a pour effet de libérer l'ouverture de la mâchoire, dispositif de préhension caractérisé en ce que la came comporte une butée destinée à limiter la course d'ouverture de la mâchoire.

Avantageusement, le dispositif de préhension comporte deux paires de mâchoires et deux paires de cames, chaque paire de mâchoires et de cames étant disposée pour pouvoir être positionnée au voisinage d'une extrémité différente d'un obus à saisir.

Avantageusement, chaque came est rendue solidaire d'une palette par un arbre.

Avantageusement, le dispositif de préhension comporte une interface de fixation destinée à solidariser le dispositif avec un moyen de levage.

Avantageusement, le dispositif de préhension comporte un moyen élastique destiné à rappeler la came et la palette dans une position tendant à bloquer l'ouverture des mâchoires.

Le dispositif de préhension pourra comporter au moins une cale dans sa partie arrière qui est destinée à venir en appui sur une face arrière du culot de l'obus pour positionner ce dernier longitudinalement par rapport au dispositif.

L'invention porte aussi sur une civière destinée à accueillir un obus en position sensiblement horizontale, civière caractérisée en ce qu'elle comporte une zone d'appui destinée à interférer avec une palette d'un dispositif de préhension tel que cité plus avant.

L'invention sera mieux comprise à la lecture de la description suivante, description faite en référence aux dessins annexés, dessins dans lesquels :
La figure 1 représente une vue en perspective de trois quart d'un dispositif selon l'invention positionné au-dessus d'un obus.
La figure 2 représente une vue en coupe transversale à plans parallèles selon les plans de coupe P et P' et suivant les directions A-A, du dispositif selon l'invention en position ouverte, au-dessus d'un obus.
La figure 3 représente une vue en coupe transversale à plans parallèles selon les plans de coupe P et P' et les directions A-A, du dispositif selon l'invention en position fermée, positionné sur un obus.
La figure 4 représente une vue en coupe transversale à plans parallèles selon les plans de coupe P et P' et les directions A-A, du dispositif se dessaisissant d'un obus.
La figure 5 représente une vue en perspective de trois quart d'un dispositif selon l'invention du dispositif libérant un obus au-dessus d'une civière.

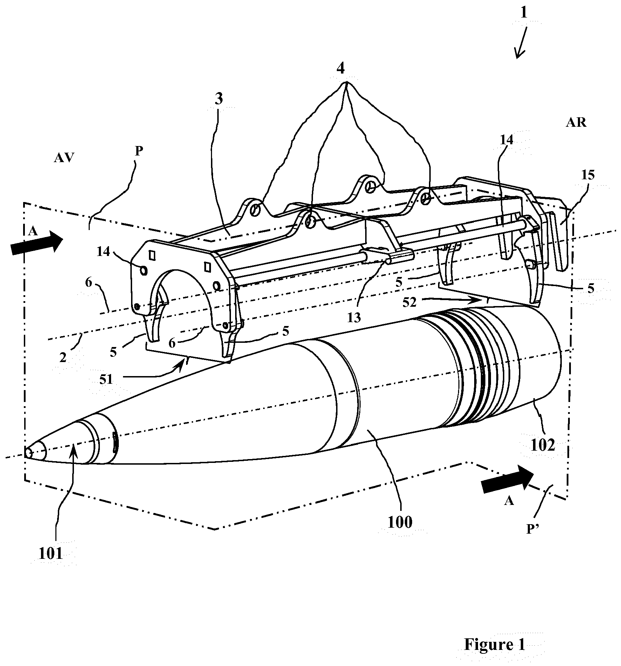

Selon la figure 1, un dispositif de préhension 1 selon l'invention est disposé au-dessus d'un obus 100 en vue de se saisir de cet obus 100. A cette fin, l'axe longitudinal 2 du dispositif 1 est placé sensiblement parallèlement à l'axe longitudinal 101 de l'obus 100. Le dispositif 1 comporte un châssis 3 doté d'interfaces de fixation 4, en l'espèce d'anneaux 4, destinés à solidariser le dispositif 1 avec un moyen de levage non représenté, tel qu'un bras élévateur ou un palan sur rail par exemple.

Le dispositif 1 comporte deux paires de mâchoires 51 et 52 situées à chaque extrémité du dispositif 1. Une première paire 51 située vers l'avant AV du dispositif est destinée à la préhension de l'obus 100 au niveau de sa partie ogivée. Une seconde paire 52 est destinée à se saisir de l'obus 100 au niveau de son culot 102. Chaque mâchoire 5 de chaque paire peut tourner autour d'un axe de pivotement 6 parallèle à l'axe longitudinal 2 du dispositif 1.

Chaque mâchoire 5 de chaque paire 51 et 52 et leurs axes relatifs 6 sont destinés à être placés de part et d'autre de l'axe longitudinal 101 du projectile 100 pour sa saisie.

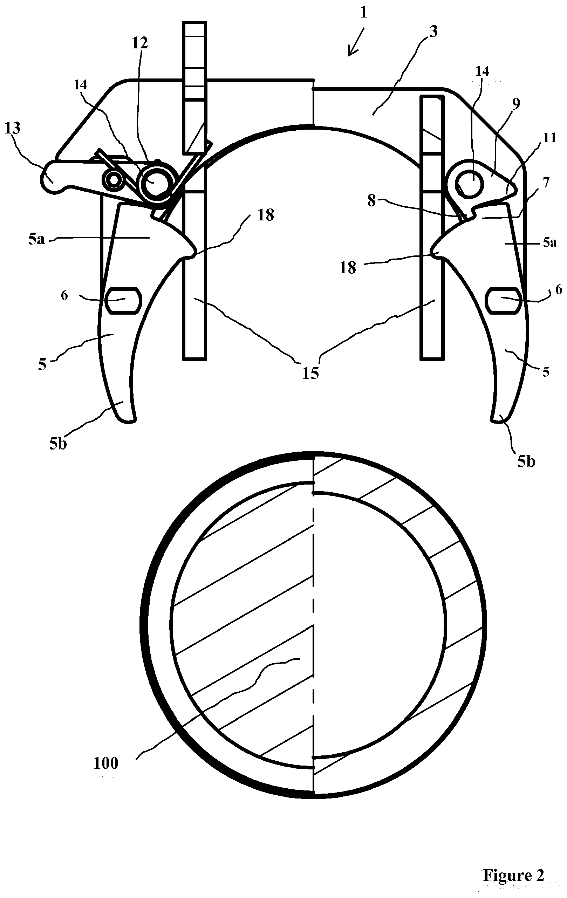

Comme visible à la figure 2, l'axe de pivotement 6 de chaque mâchoire 5 est situé entre une extrémité supérieure 5a et une extrémité inférieure 5b de la mâchoire 5.

Cette figure est une vue en coupe suivant les plans parallèles P et P' repérés à la figure 1. La partie de droite de la figure montre une mâchoire 5 de la paire 52 située au niveau de l'arrière AR du dispositif. La partie de gauche de la figure montre une mâchoire 5 de la paire 51 située au niveau de l'avant AV du dispositif.

Chaque mâchoire 5 est configurée de manière à avoir tendance à s'ouvrir en faisant pivoter la partie supérieure 5a de la mâchoire 5 vers l'intérieur du dispositif 1. Le pivotement sera obtenu avec des moyens classiques tels que un moyen élastique tendant à faire tourner la mâchoire 5 comme souhaité. On pourra également positionner le centre de gravité de la mâchoire 5 par rapport à la position de l'axe de pivotement 6 de telle sorte que la mâchoire pivote naturellement par gravité suivant le sens souhaité.

Pour limiter ce mouvement d'ouverture, la partie supérieure 5a de la mâchoire 5 comporte un cran 7 interférant avec une butée 8 d'une came 9 qui est apte à pivoter suivant l'axe d'un arbre 14 disposé parallèlement à l'axe de pivotement 6 des mâchoires 5. Cette butée 8 permet ainsi de maîtriser la position ouverte de la mâchoire 5 ce qui fiabilise le fonctionnement du dispositif en évitant toutes interférences accidentelles de la mâchoire avec la civière ou l'obus à saisir.

De cette manière, le dispositif 1 et ses paires de mâchoires 51 et 52 sont maintenus dans une position ouverte.

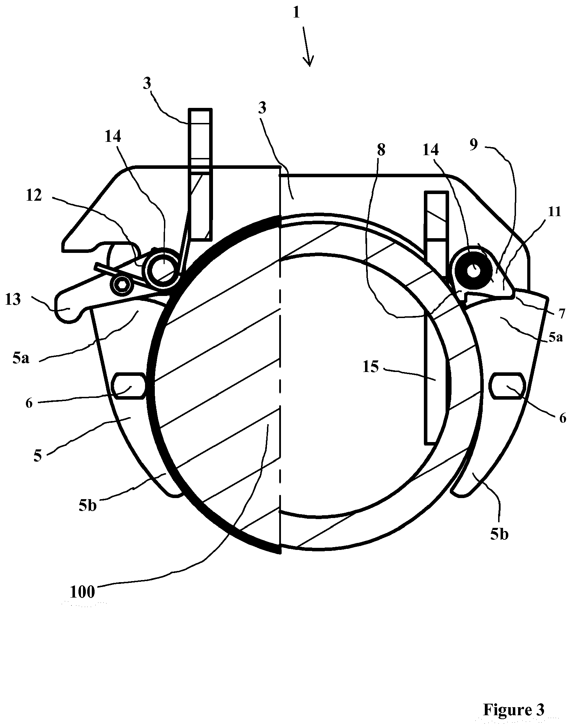

Pour se saisir d'un obus (voir la figure 3), il faut abaisser le dispositif 1 sur un obus 100 jusqu'à ce que les parties supérieures 5a de chaque mâchoire 5 soient en contact avec l'obus. Afin de mieux assurer ce contact, la partie interne supérieure de la mâchoire 5 pourra comporter un renflement 18 visible à la figure 2.

On notera au passage que selon les figures 1, 2 et 3, le dispositif comporte des cales 15 dans sa partie arrière AR qui permettent de positionner l'obus longitudinalement par rapport au dispositif 1 en venant appuyer la face arrière du culot de l'obus 100 sur ces cales 15. Le dispositif comprend ici deux cales 15 (figure 2) qui sont disposées symétriquement par rapport à un plan médian situé à égale distance des mâchoires 5 de chaque paire.

En continuant l'abaissement du dispositif 1 vers l'obus 100, les mâchoires 5 viennent en appui sur l'obus par leur extrémité supérieure 5a et pivotent autour des axes 6 de pivotement et se referment progressivement.

Une fois en position fermée les mâchoires 5 enserrent l'obus 100 et sont bloquées dans cette position par l'interférence du cran 7 de chaque mâchoire 5 avec un ergot 11 de la came 9 qui est pivoté vers le bas (figure 3).

Chacune des cames 9 situées d'un même côté du dispositif 1 est solidaire d'une palette pivotante 13 par l'arbre 14 (arbre visible à la figure 1). Chaque palette 13, saillant vers l'extérieur du dispositif 1, comporte un moyen élastique 12, en l'espèce un ressort à spirale 12, qui a pour effet de faire tourner les cames 9 de manière à ce qu'elles opposent l'ergot 11 à la trajectoire d'ouverture du cran 7 de la partie supérieure 5a de chaque mâchoire .

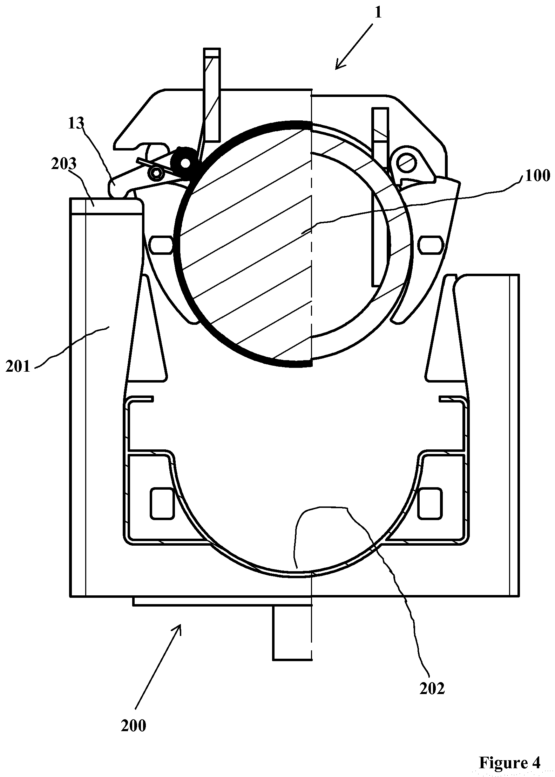

Comme visible à la figure 4, L'obus 100 est ainsi fermement bloqué entre les mâchoires 5 qui sont en correspondance de forme avec la section de l'obus qu'elles enserrent. A cet effet, chaque paire de mâchoires 51 et 52 aura un écartement adapté au profil périmétrique et au diamètre de la zone de l'obus qu'elle saisira.

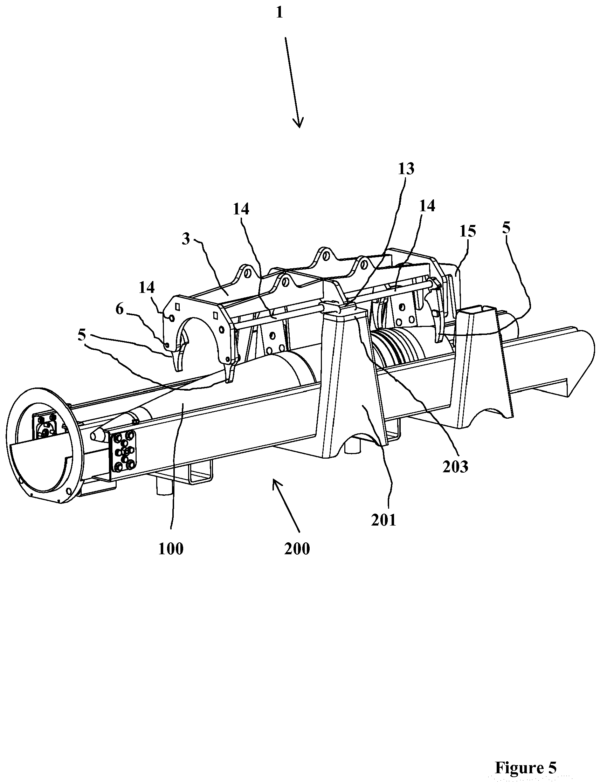

Selon la figure 5, l'obus 100 ainsi saisi par le dispositif 1 est transporté à la verticale d'une civière 200 destinée à recueillir l'obus. L'axe longitudinal du dispositif 1 et celui de l'obus 100 sont placés parallèles à l'axe longitudinal de la civière 200. La civière 200 comporte un mat 201 s'élevant sensiblement verticalement et latéralement à une zone de dépose 202 pour obus.

Au sommet du mat 201 se situe une zone d'appui 203 destinée à former une surface interférente avec la palette 13 du dispositif 1. Ainsi, en abaissant le dispositif 1, chacune des palettes 13 située de part et d'autre du dispositif 1 va venir en appui sur une des zones d'appui 203 et se voir relevée au fur et à mesure de la descente du dispositif 1. Ce faisant, le relèvement des palettes 13 entraine le pivotement des cames 9 qui vont retirer leur ergot 11 qui était en opposition contre les crans 7 de chaque mâchoire 5. Le poids de l'obus 100 s'exerçant sur la partie inférieure 5b des mâchoires va provoquer leur ouverture. L'obus 100 ainsi libéré va tomber dans la zone de dépose 202 de la civière 200 à obus (figure 4).

Ainsi, tant pour l'opération de saisie de l'obus que pour sa libération, le dispositif n'utilise pas d'actionneur consommant de l'énergie (tel un moteur ou un vérin). Le dispositif est donc plus simple et plus fiable que ceux connus de l'art antérieur. En outre, le dispositif assure une meilleure tenue de l'obus en proposant des mâchoires dont le profil est adapté à ses différentes sections.

## Revendications

1. Dispositif de préhension (1) pour obus (100), comportant au moins une paire de mâchoires (5) destinées à venir enserrer un obus (100), chaque mâchoire (5) pivotant entre une position ouverte et une position fermée autour d'un axe de pivotement (6) parallèle à l'axe longitudinal (101) de l'obus (100), l'axe de pivotement (6) de chaque mâchoire (5) étant situé entre une extrémité inférieure (5b) et une extrémité supérieure (5a) de la mâchoire (5), l'extrémité supérieure (5a) de chaque mâchoire (5) permettant la fermeture de la mâchoire (5) par appui de cette extrémité supérieure (5a) sur un obus (100) à saisir, l'extrémité supérieure (5a) de chaque mâchoire (5) comportant un cran (7) destiné à interférer avec un ergot (11) d'une came (9) pour maintenir les mâchoires (5) en position fermée, la came (9) étant solidaire d'une palette (13) pivotante dont le pivotement permet de faire pivoter la came (9) et de dégager ainsi l'ergot (11) de la trajectoire tournante du cran (7) de la mâchoire (5) ce qui a pour effet de libérer l'ouverture de la mâchoire (5), dispositif de préhension (1) **caractérisé en ce que** la came (9) comporte une butée (8) destinée à limiter la course d'ouverture de la mâchoire (5).

2. Dispositif de préhension selon la revendication 1, **caractérisé en ce qu'**il comporte deux paires de mâchoires (5) et deux paires de cames (9), chaque paire de mâchoires (5) et de cames (9) étant disposée pour pouvoir être positionnée au voisinage d'une extrémité différente d'un obus (100) à saisir.

3. Dispositif de préhension (1) selon une des revendications 1 à 2, **caractérisé en ce que** chaque came (9) est rendue solidaire d'une palette (13) par un arbre (14).

4. Dispositif de préhension (1) selon une des revendications 1 à 3, **caractérisé en ce qu'**il comporte une interface (4) de fixation destinée à solidariser le dispositif (1) avec un moyen de levage.

5. Dispositif de préhension (1) selon une des revendications 1 à 4, **caractérisé en ce qu'**il comporte un moyen élastique (12) destiné à rappeler la came (9) et la palette (13) dans une position tendant à bloquer l'ouverture des mâchoires (5).

6. Dispositif de préhension (1) selon une des revendications 1 à 5, **caractérisé en ce qu'**il comporte au moins une cale (15) dans sa partie arrière qui est destinée à venir en appui sur une face arrière du culot de l'obus pour positionner ce dernier longitudinalement par rapport au dispositif.

7. Civière (200) destinée à accueillir un obus (100) en position sensiblement horizontale, civière (200) **caractérisée en ce qu'**elle comporte une zone d'appui (203) destinée à interférer avec une palette (13) d'un dispositif de préhension (1) selon une des revendications 1 à 6.

## Patentansprüche

1. Greifvorrichtung (1) für eine Granate (100), umfassend mindestens ein Paar Klauen (5) zum Umschließen einer Granate (100), wobei sich jede Klaue (5) um eine parallel zur Längsachse (101) der Granate (100) verlaufenden Schwenkachse (6) zwischen einer geöffneten Stellung und einer geschlossenen Stellung schwenkt, wobei die Schwenkachse (6) jeder Klaue (5) zwischen einem unteren Ende (5b) und einem oberen Ende (5a) der Klaue (5) angeordnet ist, wobei das obere Ende (5a) jeder Klaue (5) die Schließung der Klaue (5) ermöglicht, indem das obere Ende (5a) auf einer zu greifenden Granate (100) aufliegt, wobei das obere Ende (5a) jeder Klaue (5) eine Raste (7) umfasst, die in eine Lasche (11) eines Nockens (9) eingreifen soll, um die Klauen (5) in der geschlossenen Stellung zu halten, wobei der Nocken (9) mit einer schwenkenden Palette (13) befestigt ist, deren Schwenkung die Schwenkung des Nockens (9) und somit die Entfernung der Lasche (11) aus der Drehbahn der Raste (7) der Klaue (5) zu ermöglichen, was die Freigabe der Öffnung der Klaue (5) zur Folge hat, wobei die Greifvorrichtung (1) **dadurch gekennzeichnet ist, dass** der Nocken (9) einen Anschlag (8) umfasst, der den Öffnungsweg der Klaue (5) begrenzt.

2. Vorrichtung nach Anspruch 1, **dadurch gekennzeichnet, dass** sie zwei Paar Klauen (5) und zwei Paar Nocken (9) umfasst, wobei jedes Klauen- (5) und Nockenpaar (9) derart angeordnet ist, dass es in der Nähe eines unterschiedlichen Endes einer zu greifenden Granate (100) positioniert werden kann.

3. Vorrichtung (1) nach einem der Ansprüche 1 - 2, **dadurch gekennzeichnet, dass** jeder Nocken (9) durch eine Welle (14) mit einer Palette (13) befestigt ist.

4. Vorrichtung (1) nach einem der Ansprüche 1 - 3, **dadurch gekennzeichnet, dass** sie ein Kopplungsstück (4) zur Befestigung der Vorrichtung (1) mit einer Hebeeinrichtung umfasst.

5. Vorrichtung (1) nach einem der Ansprüche 1 - 4, **dadurch gekennzeichnet, dass** sie ein elastisches Mittel (12) umfasst, um Nocken (9) und Palette (13) in eine Stellung zurückzubringen, in der das Öffnen der Klauen (5) verhindert wird.

6. Vorrichtung (1) nach einem der Ansprüche 1 - 5, **dadurch gekennzeichnet, dass** sie in ihrem Hinterteil mindestens einen Keil (15) umfasst, der auf einer Rückseite der Einfassung der Granate aufliegen soll, um diese in Längsrichtung relativ zur Vorrichtung zu positionieren.

7. Trage (200) zur Aufnahme einer Granate (100) in im Wesentlichen horizontaler Position, wobei die Trage (200) **dadurch gekennzeichnet ist, dass** sie einen Abstützungsbereich (203) umfasst, der in eine Palette (13) einer Greifvorrichtung (1) nach einem der Ansprüche 1 - 6 eingreifen soll.

## Claims

1. A shell (100) gripping device (1), comprising at least one pair of jaws (5) for holding a shell (100), each jaw (5) pivoting between an open position and a closed position around a pivot axis (6) parallel to the longitudinal axis (101) of the shell (100), the pivot axis (6) of each jaw (5) being located between a lower end (5b) and an upper end (5a) of the jaw (5), the upper end (5a) of each jaw (5) allowing to close the jaw (5) by abutting this upper end (5a) against a shell (100) to be gripped, the upper end (5a) of each jaw (5) being provided with a notch (7) for interfering with a lug (11) of a cam (9) to hold the jaws (5) in the closed position, the cam (9) being integral with a pivoting blade (13) the pivoting of which allows to pivot the cam (9) and to thus disengage the lug (11) from the rotating trajectory of the notch (7) of the jaw (5), thereby releasing the opening of the jaw (5), the gripping device (1) being **characterised in that** the cam (9) has a stop (8) for limiting the opening stroke of the jaw (5) .

2. The gripping device according to claim 1, **characterised in that** it has two pairs of jaws (5) and two pairs of cams (9), each pair of jaws (5) and of cams (9) being arranged to be able to be positioned at a vicinity of a different end of a shell (100) to be gripped.

3. The gripping device (1) according to one of claims 1 and 2, **characterised in that** each cam (9) is made integral with a blade (13) by a shaft (14).

4. The gripping device (1) according to one of claims 1 to 3, **characterised in that** it has a fastening interface (4) for making the device (1) integral with a lifting means.

5. The gripping device (1) according to one of claims 1 to 4, **characterised in that** it has an elastic means (12) for biasing the cam (9) and the blade (13) back in a position tending to block the opening of the jaws (5).

6. The gripping device (1) according to one of claims 1 to 5, **characterised in that** it has at least one block (15) in its rear part which is intended to abut against a rear face of the base of the shell in order to position the latter longitudinally with respect to the device.

7. A stretcher (200) intended to accommodate a shell (100) in a substantially horizontal position, the stretcher (200) being **characterised in that** it has an abutment area (203) for interfering with a blade (13) of a gripping device (1) according to one of claims 1 to 6.
